# EUROPÄISCHE PATENTSCHRIFT

(11) **EP 0 886 072 B1**
(45) Veröffentlichungstag und Bekanntmachung des Hinweises auf die Patenterteilung: **14.05.2003**
(21) Anmeldenummer: 98890130.2
(22) Anmeldetag: 06.05.1998
(51) Int. Cl.: F16B 17/00, F16B 5/07

(54) **Hohlkörper, der aus mindestens einem Bauteil aus Flachmaterial besteht, und Verfahren zu seiner Herstellung**
Hollow body consisting of at least one flat material element, and process for its manufacturing
Corps creux constitué d'au moins un élément de construction plat, et méthode pour sa fabrication

(30) Priorität: 17.06.1997 AT 104997
(43) Veröffentlichungstag der Anmeldung: 23.12.1998
(73) Patentinhaber: Blaha, Friedrich, Mag. Ing., 2100 Korneuburg/Bisamberg (AT)
(72) Erfinder: Blaha, Friedrich, Mag. Ing., 2100 Korneuburg/Bisamberg (AT)
(74) Vertreter: Israiloff, Peter, Dr. Dipl.-Ing.

(56) Entgegenhaltungen:
- DE-A- 3 724 648
- FR-A- 958 151
- FR-A- 2 258 589
- FR-A- 2 705 412
- US-A- 3 452 959

## Beschreibung

Die Erfindung betrifft einen Hohlkörper, der aus mindestens einem Bauteil aus Flachmaterial, vorzugsweise aus Metallblech, besteht und bei dem zumindest ein erster Randbereich mit einem zweiten Randbereich verbunden ist, wobei der erste Randbereich eine Reihe Ausnehmungen und der zweite Randbereich eine Reihe zu diesen Ausnehmungen komplementäre Zähne mit dazwischen befindlichen Ausnehmungen aufweist, wobei die Zähne des zweiten Randbereiches in die Ausnehmungen des ersten Randbereiches eingreifen.

Weiters betrifft die Erfindung ein Verfahren zur Herstellung eines solchen Hohlkörpers, bei dem an wenigstens einem ersten Randbereich eine Reihe Ausnehmungen und an wenigstens einem zweiten Randbereich eine Reihe zu diesen Ausnehmungen komplementäre Zähne mit dazwischen befindlichen Ausnehmungen ausgebildet und zur Verbindung der Randbereiche die Zähne des zweiten Randbereiches in die Ausnehmungen des ersten Randbereiches eingesetzt werden.

Bisher werden im Einrichtungsbereich hauptsächlich Platten aus Holz, Sperrholz oder Spanplatten sowie auch aus anderen Materialien (Kunststoff, Karton, Hartschaum, Naturfasern, Sandwich-Platten, usw.) mit den unterschiedlichsten Oberflächen, in verschiedenen Fertigungsweisen und Ausführungformen für nahezu alle ebenen Flächen verwendet. Metall wird zumeist in Form von Profilrohren, Trägern, Leisten, dekorativ gelochten Flächen, tragenden Rahmenkonstruktionen sowie Gestellen hergestellt und eingebaut.

Schon lange besteht der Wunsch der Möbelgestalter, in manchen Fällen von den ebenen Flächen wegzukommen. Das wird beispielsweise so gelöst, daß Platten in Schichtaufbau in der jeweils gewünschten Form hergestellt werden oder krumme Teile aus dem Vollen gearbeitet werden.

In letzter Zeit kommt zunehmend der Wunsch auf, Oberflächen aus Blech zu gestalten, da sich hiedurch weitere interessante Oberflächengestaltungen durch Musterung, Beizen, Lochungen, Prägen sowie alte möglichen Arten von Lackieren, Pulverbeschichten, usw. ergeben. Außerdem läßt sich Blech leicht verformen, sodaß hierdurch weitere Gestaltungsmöglichkeiten entstehen.

Allerdings ist dünnes Blech sehr verwindungsweich, in größeren Stärken jedoch viel zu schwer für die Verwendung im Möbelbau, und zwar bei allen üblichen Metallen. Das Umkanten der Ränder ergibt nur eine Vergrößerung der Biegesteifigkeit, die Verwindung ist jedoch weiterhin leicht möglich Die Torsionssteifigkeit einer üblichen Holzplatte wird bei weitem nicht erreicht. Deshalb werden tragende Bleche in der Regel mit einem verwindungssteifen Rahmen versehen oder an einem Profilrohrgestell befestigt. So sind z.B. Blechschränke oder Blechregale erst durch das Einformen oder Einschweißen von Profilen, Knotenblechen oder Verstrebungen ausreichend verwindungssteif. Schranktüren aus Blech benötigen wegen der üblichen großen Verwindungsmöglichkeit sowohl oben als auch unten eine Fixierung.

Im Fassadenbau ist es bekannt, Blechhohlkörper auszuschäumen, um sie zu stabilisieren und außerdem mit einem Wärmeschutz zu versehen. Dies ist jedoch aus Umweltgründen im Innenbereich problematisch; weiters erfordert es auch einen geschlossenen Hohlkörper.

Während in vielen Fällen die Verwindung akzeptabel ist, gibt es doch viele Anwendungen, bei welchen besonders hohe Verwindungssteifigkeit gewünscht wird, wie bei Sichtschutz- und Organisationsblenden, welche hinter Schreibtischflächen angebracht und häufig durch Ablagefächer oder angebrachte Pulte hoch belastet sind, aber auch bei Bauelementen von Stellwänden, Raumteilern und Empfangsanlagen, wo die Verwindungssteifigkeit insbesondere die Standsicherheit und Stabilität bestimmt, aber auch im Kleinmöbelbereich. Alle diese Anwendungen erfordern eine entsprechend stabile Aussteifung oder die Kombination mit verwindungssteifen Bauteilen etwa aus Holzplatten. Die bei einer Verwindung auftretenden hohen Torsionskräfte im Rahmen erfordern dabei zumeist eine Schweißkonstruktion und damit verbunden den Aufwand an Vorrichtungen, Verzug auszurichten, Reinigung, Verschleifen usw.

Nachteilig ist weiters, daß Bauelemente mit zusätzlichem torsionssteifen Rahmen oft eine relativ große Materialstärke und damit großes Gewicht aufweisen.

Blechverbindungen, welche durch Zusammenpressen von Zähnen entstehen, sind bekannt. So zeigt die DE 40 07 161 A1 ein Verfahren zum Verbinden der Randbereiche zweier plattenförmiger Bauteile in mindestens zwei Arbeitsschritten, nämlich dem formschlüssigen Ineinanderfügen der Bauteile und einer nachfolgenden Kaltverformung zumindest eines der Bauteile längs der Stoßfuge.

Die GB 2 244 015 A bezieht sich auf die Verbindung zweier Randbereiche eines Bleches, wobei eine Kaltverformung an der Stoßfuge mit Hilfe eines Dornes und einer Walze vorgesehen ist, um Spalten an der Stoßfuge zu schließen.

Die US 518 767 A lehrt ein Verfahren, bei dem Zähne aus der Ebene eines dünnwandigen Bauteiles herausgebogen und anschließend in Ausnehmungen an einem weiteren Randbereich verhakt werden.

In der DE 95 361 C ist ein Verfahren zur Verbindung der Randbereiche eines dünnwandigen Bauteiles gezeigt, bei dem Zähne in der Ebene des Bauteiles in ihre zugeordneten Ausnehmungen eingesetzt und in dieser Ebene verformt werden.

Zur Herstellung verwindungssteifer Hohlkörper sind diese bekannten Verfahren ungeeignet, und die fertigen Produkte zeigen ein optisch unansehnliches Erscheinungsbild.

Aufgabe der Erfindung ist es, eine Konstruktion und ein Fertigungsverfahren zu schaffen, mit denen diese Nachteile beseitigt werden und die es gestatten, relativ dünne und leichte hohle Paneele aus Blech zu fertigen, welche auch ohne Schweißen eine möglichst hohe Verwindungssteifigkeit aufweisen und mit den üblichen Einrichtungen einer modernen Blechverarbeitung oder Tischlerei in beliebigen Breiten, Längen und Dicken oder auch unregelmäßigen Geometrien gefertigt werden können. Weiters sollen auch beliebig gekrümmte oder abgewinkelte Bauteile hergestellt werden können, unabhängig von Oberflächen, Lochungen und Farbgebungen.

Diese Aufgabe wird einerseits mit einem Hohlkörper der eingangs dargelegten Art dadurch gelöst, daß erfindungsgemäß die Randbereiche im Bereich des Grundes der Ausnehmungen einander kreuzen und lediglich in diesem Bereich über die Dicke des Flachmaterials kraftschlüssig miteinander verbunden sind.

Anderseits wird die gestellte Aufgabe mit einem Verfahren der eingangs angegebenen Art dadurch gelöst, daß erfindungsgemäß die Randbereiche vor ihrer Verbindung bezüglich der Fläche des angrenzenden Flachmaterials jeweils entlang einer Biegelinie in derselben Richtung um einen vorbestimmten Winkel abgebogen werden und daß das Einsetzen der Zähne in die Ausnehmungen im wesentlichen senkrecht zur Fläche des angrenzenden Flachmaterials durchgeführt wird.

Bei einer Alternative des erfindungsgemäßen Verfahrens werden die Randbereiche um einen spitzen Winkel abgebogen, wobei die Biegelinie im Bereich des Grundes der Ausnehmungen verläuft, und das Einsetzen der Zähne in die Ausnehmungen wird im wesentlichen in der Fläche des angrenzenden Flachmaterials durchgeführt.
Auf diese Weise schafft die Erfindung einen Hohlkörper sowie ein Verfahren zu dessen Herstellung, der aus einem, vorzugsweise aber zwei Bauteilen aus Flachmaterial besteht, die zu einem platten-, tafel- oder paneelförmigen Bauelement für den Möbelbau miteinander verbunden sind, das selbst bei Verwendung dünner Bleche äußerst formstabil, insbesondere verwindungssteif ist. Die Verbindung läßt sich äußerst rasch und leicht auch mit einfachen Vorrichtungen, aber auch händisch durchführen und hält großen Kräften stand, die ein Lösen der Verbindung bewirkten. Ein weiterer Vorteil ist, daß die Stoßstelle der Randbereiche an einem optisch unauffälligen Bereich des Hohlkörpers angeordnet sein kann, sodaß sich ein optisch ansprechendes Erscheinungsbild desselben ergibt, z. B. an den Schmalseiten eines paneelförmigen Bauelements.

Obwohl im folgenden ein paneelförmiger Hohlkörper beschrieben ist, kann der Hohlkörper beliebige Form aufweisen, z.B. ein Rohr oder ein Hohlprofil sein.

Da die Verbindung ein Verschweißen entbehrlich macht, ist keine Nachbearbeitung der Verbindung, wie Ausrichten, Schleifen od. dgl. nötig. Die Flachmaterialien bzw. die Bleche können bereits vor der Verbindung gebeizt, lackiert, beschichtet, geprägt, gelocht oder gemustert werden.

Erfindungsgemäß ist insbesondere die Herstellung paneelartiger Bauelemente vorgesehen, wobei zwei an ihren Randbereichen gegengleich schachtelförmig abgekantete und deckungsgleiche Blechteile aufeinander gelegt und mit ihren Randbereichen verbunden werden, wobei die Verbindungstellen an die Schmalseiten des Hohlkörpers verlegt sind und wobei ein Selbsthalten der Verbindung durch Reibung, Formschluß oder Kaltverschweißung erfolgt. Die bei der Verwindung auftretenden Torsionskräfte werden als Druckkräfte von den Zahnflanken aufgefangen. Die Zahl der Zähne und damit die Zahl der Berührungspunkte ist für die Größe der Belastbarkeit bestimmend. Auf diese Weise erhält man einen allseitig geschlossenen Hohlkörper aus Blech. Die Verbindung erfolgt beispielsweise mittels handelsüblichen Korpus- oder Furnierpressen.

Die erfindungsgemäße Verbindung unterscheidet sich von den bekannten dadurch, daß sie grundsätzlich an allen Rändern der Bleche umlaufend angebracht werden bzw. entlang einer geschlossenen Linie verlaufen kann, daß sie in Profilansicht vorzugsweise einen symmetrischen Aufbau zuläßt, daß sie nicht in einem Flansch angeordnet liegt sowie vor allem dadurch, daß die Zähne der beiden Teile, im Profil gesehen, im Berührungsbereich einander kreuzen, statt in einer Ebene zu liegen. Da die Zahnflächen in der Regel wechselweise den Grund der zugehörigen Ausnehmung des jeweils anderen Flachmaterials berühren, wird bei der Verbindung einerseits eine exakte Zentrierung der beiden Flachmaterialien zueinander bewirkt und andererseits vom Grund der Ausnehmungen zugleich ein Anschlag geschaffen. Die Ausgestaltung mit abgerundeten oder abgeschrägten Zähnen und mit gegenseitiger, einander kreuzenden Anordnung der beiden Randbereiche erleichtert das Ausrichten der Teile zueinander bzw. führt die Zähne bei ihrem Einsetzen in die Ausnehmungen am Anfang der Verbindung, insbesondere bei gekrümmten Flachmaterialien.

In vorteilhafter Weiterbildung der Erfindung können die Randbereiche bezüglich der Fläche des angrenzenden Flachmaterials jeweils entlang einer Biegelinie in derselben Richtung um einen vorbestimmten Winkel abgebogen sein.

Dabei kann die Biegelinie im Bereich des Grundes der Ausnehmungen verlaufen. Dies erbringt die Vorteile, daß die Verbindungsstelle in einer Ebene liegen kann und sich der Hohlkörper äußerst einfach herstellen läßt.

Vorteilhaft ist weiters, wenn die Zahnflächen am Grund der Ausnehmungen anliegen, weil hiemit eine Zentrierung erzielt und eine optisch geschlossene Verbindungsstelle erzielt wird.

Ferner können die Ausnehmungen des ersten Randbereiches am freien Rand des Flachmaterials offen sein, wobei dazwischenliegende Zähne gebildet sind. Dies ergibt herstellungmäßige Vereinfachungen und ermöglicht die Herstellung von Paneelen aus identischen Teilen.

Weiters können vorteilhafterweise sämtliche Zähne im Bereich des Grundes ihrer Zahnlücken seitliche Vorsprünge aufweisen, deren Höhe im Bereich einer Übergangs- oder Preßpassung liegt, wodurch die Festigkeit der Verbindung durch Reibungsschluß erhöht wird.

Dabei können die Vorsprünge in einem der Dicke des Flachmaterials entsprechenden Abstand vom Grund der Ausnehmungen angeordnet sein, wodurch zusätzlich ein Formschluß geschaffen wird.

Herstellungsmäßige Vereinfachungen ergeben sich weiters, wenn beide Randbereiche geometrisch identisch ausgebildet sind.

Bei einer Variante der Erfindung können die Zähne entlang der Länge der Randbereiche mehrere unterschiedliche Zahnformen und/oder -breiten aufweisen. Dies empfiehlt sich bei der Herstellung gekrümmter Paneele.

Zum erleichterten Einsetzen der Zähne in die Ausnehmungen können die Zähne an ihren freien Enden abgeschrägt oder abgerundet sein.

Von Vorteil ist, wenn die beiden Randbereiche an ihren freien Rändern zu ihrem zugeordneten Flachmaterial abgebogene Verlängerungen aufweisen, zwischen denen ein Bolzen, eine Paßfeder od. dgl. eingesetzt ist, weil auf diese Weise die Festigkeit der Verbindung verstärkt oder dieselbe unlösbar gemacht wird.

Eine vorteilhafte Ausführungsform der Erfindung zeichnet sich dadurch aus, daß an einem der Randbereiche am Grund wenigstens einer Ausnehmung zumindest ein Fortsatz vorgesehen ist und daß am jeweils anderen Randbereich mindestens eine Aussparung ausgebildet ist, wobei jeder Fortsatz in seine zugeordnete Aussparung formschlüssig eingreift. Auch hier wird eine zusätzliche formschlüssige Sicherung gegen Lösen der Verbindung erzielt.

Eine bevorzugte Ausführungsform besteht darin, daß der Hohlkörper im wesentlichen allseitig geschlossen ist und entlang sämtlicher Randbereiche Zähne und Ausnehmungen vorgesehen sind. Dies ergibt einen besonders stabilen Hohlkörper.

Wie bereits erwähnt, kann der Hohlkörper in Form einer Platte, Tafel oder eines Paneels ausgebildet sein.

Dabei sind aus optischen Gründen, die im Möbelbau sehr wichtig sind, die Randbereiche an der Schmalseite des Hohlkörpers miteinander verbunden und gegebenenfalls mit einem zusätzlich angebrachten Bauteil abgedeckt.

Vorzugsweise besteht der Hohlkörper aus zwei identischen Bauteilen aus Flachmaterial, die sich leicht und einfach vorfertigen lassen.

Ferner kann der Hohlkörper aus wenigstens zwei Bauteilen aus Flachmaterial aus verschiedenen Werkstoffen bestehen.

Weiters können die Flachmaterialien unterschiedliche Dicke aufweisen.

Mit diesen Maßnahmen lassen sich in einfacher Weise z. b. Akustikplatten herstellen.

Je nach Verwendungszweck und Belastung des Hohlkörpers können im Inneren des Hohlkörpers Aussteifungen, Gewindeplatten, Kupplungsmechanismen, Einlagen aus Isolier-, Dämm-, Dekor-Material od. dgl. vorgesehen und gegebenenfalls von den Zähnen arretiert sein. Insbesondere können auch im Möbelbau übliche Exzenterspanner eingesetzt werden, wodurch z.B. ein System aus Metallund Holzpaneelen hergestellt werden kann, welche auf die gleiche Art miteinander lösbar verbunden sind.

Um an dem Hohlkörper Haken od. dgl. anbringen zu können, kann der Hohlkörper Öffnungen, vorzugsweise einen Lochraster aufweisen.

In vorteilhafter weiterer Ausgestaltung des erfindungsgemäßen Verfahrens können die Randbereiche um einen spitzen Winkel abgebogen werden, wobei die Biegelinie im Bereich des Grundes der Ausnehmungen verläuft, und das Einsetzen der Zähne in die Ausnehmungen im wesentlichen in der Fläche des angrenzenden Flachmaterials durchgeführt werden.

Alternativ können die Randbereiche um einen stumpfen Winkel abgebogen werden und das Einsetzen der Zähne in die Ausnehmungen im wesentlichen senkrecht zur Fläche des angrenzenden Flachmaterials durchgeführt werden.

Ferner können während des Einsetzens der Zähne in die Ausnehmungen deren Flanken an den Kontaktstellen elastisch-plastisch verformt werden.

Insbesondere zur Herstellung gekrümmter Paneele ist von Vorteil, wenn das Einsetzen der Zähne in die Ausnehmungen schrittweise nach Art eines Reißverschlusses durchgeführt wird.

Weiters können vor der Verbindung der Randbereiche an denselben an ihren freien Rändern Verlängerungen ausgebildet und diese zu ihrem zugeordneten Flachmaterial abgebogen werden, zwischen die Verlängerungen ein Bolzen, eine Paßfeder od. dgl. eingelegt und bei der Verbindung der Randbereiche die Verlängerungen durch Angriff am jeweils anderen, gegenüberliegenden Flachmaterial weiter abgebogen und zugleich der Bolzen, die Paßfeder od. dgl. von den Verlängerungen arretiert werden.

Zur Herstellung eines gekrümmten Hohlkörpers kann die Breite der Zähne und diejenige der Ausnehmungen entsprechend dem fertigen Hohlkörper ausgebildet. werden und eines der Flachmaterialien vor der Verbindung der Randbereiche und das andere Flachmaterial während dieser Verbindung gekrümmt werden.

Alternativ können die Zähne und Ausnehmungen entsprechend dem fertigen Hohlkörper ausgebildet und während der Verbindung der Randbereiche beide Flachmaterialien gekrümmt werden.

Auf diese Weise lassen sich gekrümmte Paneele je nach Art der Flachmaterialien einfach herstellen.

Die Fertigung der Teile erfolgt vorzugsweise durch Stanzen, Lasern, Wasserstrahlen oder Nibbeln von Platinen, welche dann in der Regel schachtelartig abgekantet bzw. gebogen werden. In eine Seite kann man die Versteifungen, Befestigungsplatten, Füllmaterialien etc., aber auch Dekorflächen einlegen. Die richtige Position ist vorzugsweise durch Ausnehmungen in den Zahnreihen festgelegt. Zuletzt wird die andere Seite paßgenau darübergelegt, sodaß die umlaufenden Zähne in einen vorerst losen Eingriff gelangen. Durch anschließendes Zusammenpressen werden die Zähne in die Ausnehmungen gedrückt, wobei sie untereinander kraftschlüssig verriegeln und gegebenenfalls alle Einlagen in ihrer Lage fixiert werden.

Selbstverständlich kann man einen solchen Hohlkörper auch aus mehr als zwei Teilen zusammensetzen, anderseits aber auch aus einem einzigen Stück Flachmaterial herstellen, das z. B. zu einem Rohr zusammengebogen wird.

Obwohl die häufigsten Anwendungsfälle eine symmetrische und gleichartige Zahngestaltung aufweisen, so sind doch Fälle mit unterschiedlichen Geometrien möglich. Insbesondere können auf nur einem Rand Zähne sitzen, auf dem anderen Rand komplementäre, am freien Rand geschlossen Ausnehmungen vorhanden sein. Desgleichen können die Zahnbreiten variieren; insbesondere werden in gekrümmten Bereichen relativ schmale Zähne benötigt, weil ja dort der gesamte Randbereich mitgebogen werden muß, ohne daß es zum Ausweichen oder Knicken des Flachmaterials kommen darf.

Da die Zahnflanken den Zusammenhalt der Bauteile bestimmen, sitzen die Zähne vorzugsweise mit Übermaß in den Ausnehmungen, sodaß die Vorspannung den Zusammenhalt durch Reibungsschluß bewirkt. Je nach verwendetem Material können seitliche Vorsprünge in Form von Ausbuchtungen an den Flanken der Zähne oder Ausnehmungen vorgesehen sein, welche derart angeordnet sind, daß die Endposition unmittelbar nach dem Überwinden der Vorsprünge erreicht wird und damit eine Verrastung entsteht. Dabei kann es auch zu einer plastischen Verformung der Zahnflanken und zur Bildung von Kaltschweißstellen kommen. Beim Abkanten von Blechzähnen unter gewissen Biegewinkeln können solche Ausbuchtungen von selbst entstehen, da sich das Metall in der Biegekante staucht und seitlich ausweicht. Die Geometrie der Zähne und die Position der Abkantung können so gewählt werden, daß sich diese Ausbuchtungen genau richtig an der erwünschten Stelle bilden.

Die Zähne und Ausnehmungen können auch derart angeordnet sein, daß sie von außen nicht sichtbar sind. Die Fugen zwischen den Bauteilen können durch einen zusätzlichen Verkleidungsbauteil abgedeckt sein, der auch von den Zähnen und Ausnehmungen arretiert sein kann. Ist solch ein zusätzlicher Verkleidungsbauteil vorgesehen, so können die Zähne auch nach außen weisen.

Gekrümmte oder abgewinkelte Paneele können hergestellt werden, wenn die Randbereiche der Bauteile mit den Zähnen nur eine geringe Bauhöhe aufweisen, sodaß es beim Krümmen zu keinem Ausknicken oder anderen wesentlichen Deformationen kommt. Insbesondere empfiehlt sich eine Verringerung der Zahnbreite. Die Zahnteilungen der beiden Randbereiche müssen im ebenen Zustand ein unterschiedliches Maß aufweisen, welches so berechnet ist, daß nach dem Krümmen die Teilungen übereinstimmen. So läßt sich die Krümmung oder der Winkel durch die Art und Größe des Teilungsunterschiedes festlegen.

Die Verbindung erfolgt hiebei vorzugsweise mittels Walzen oder schrittweises Zusammenpressen mittels eines Pressenstempels. Die Verbindung ist auch von Hand mittels mehrerer Zwingen möglich. Zur Arbeitserleichterung können ein oder beide Bauteile bereits vorgebogen sein. Die Krümmung kann aber auch zugleich mit dem Zusammenpressen etwa mittels einer Dreiwalzen-Anordnung erfolgen. Diese Art der Verbindung ist mit dem Schließen eines Reißverschlusses vergleichbar. Zur Verhinderung von Deformationen empfehlen sich biegeweiche, drucksteife Einlagebauteile, die zumindest in den Randbereichen angeordnet sind.

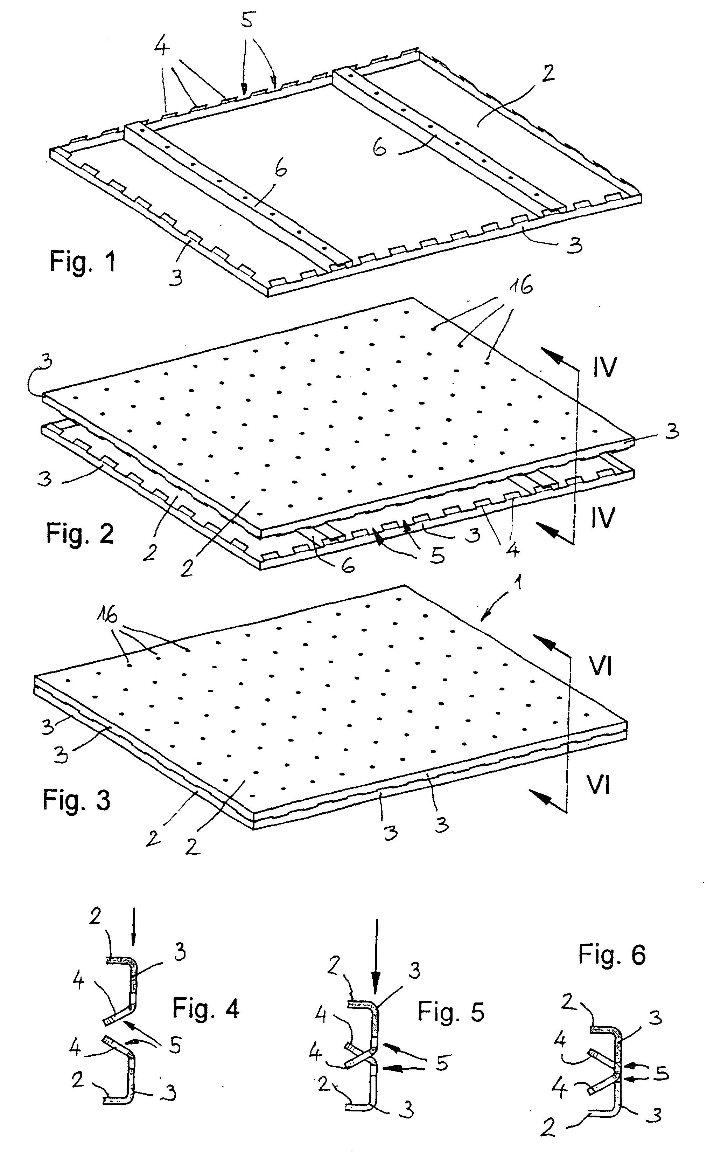

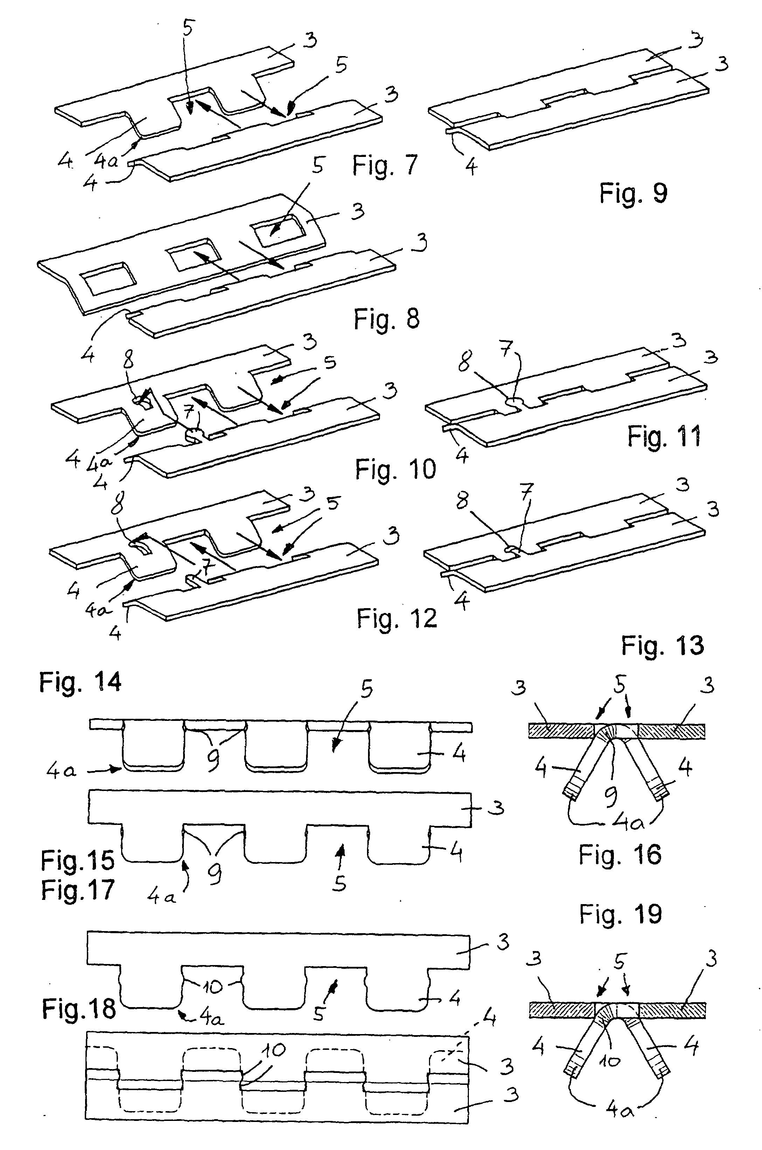

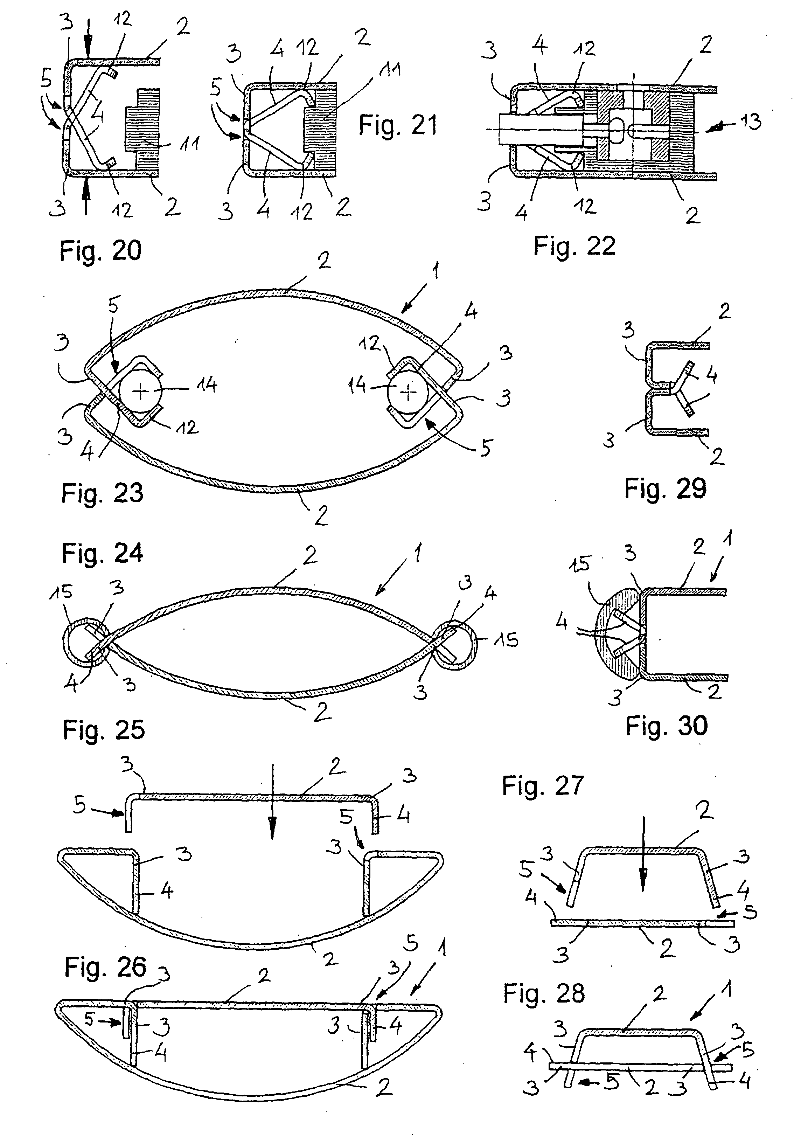

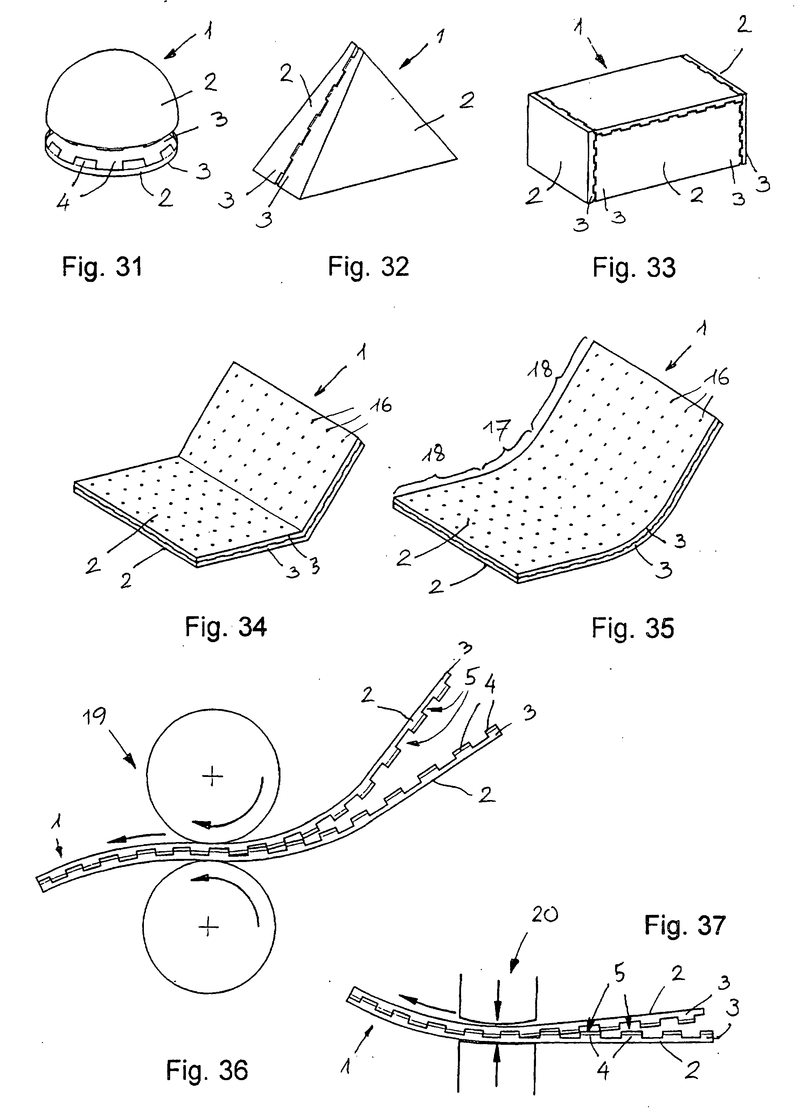

Die Erfindung wird im folgenden anhand bevorzugter Ausführungsbeispiele näher erläutert, die in den Zeichnungen dargestellt sind; es zeigen Fig. 1 in schaubildlicher Ansicht einen die eine Hälfte eines paneelartigen Hohlkörpers bildenden Bauteil aus Flachmaterial, Fig. 2 in schaubildlicher Ansicht zwei derartige Bauteile vor ihrer Verbindung, Fig. 3 in schaubildlicher Ansicht den von diesen Bauteilen gebildeten Hohlkörper, Fig. 4 einen Schnitt durch die Randbereiche der Bauteile vor der Verbindung, nach der Linie IV-IV in Fig. 2, Fig. 5 einen Schnitt durch die Randbereiche der Bauteile während der Verbindung, nach der Linie VI-VI in Fig. 3, Fig. 6 einen Schnitt durch die Randbereiche der Bauteile nach der Verbindung, Fig. 7 in schaubildlicher Ansicht je einen Abschnitt der Randbereiche vor der Verbindung, Fig. 8 in schaubildlicher Ansicht je einen Abschnitt der Randbereiche einer Variante der Erfindung, Fig. 9 in schaubildlicher Ansicht diese Randbereiche nach der Verbindung, Fig. 10 in schaubildlicher Ansicht je einen Abschnitt der Randbereiche einer weiteren Ausführungsform der Erfindung vor der Verbindung, Fig. 11 in schaubildlicher Ansicht diese Randbereiche nach der Verbindung, Fig. 12 in schaubildlicher Ansicht je einen Abschnitt der Randbereiche einer weiteren Ausführungsform vor der Verbindung, Fig. 13 in schaubildlicher Ansicht diese Randbereiche nach der Verbindung, Fig. 14 eine Stirnansicht eines Abschnittes eines Randbereiches einer weiteren Variante der Erfindung, Fig. 15 eine Draufsicht auf diesen Abschnitt, Fig. 16 einen Schnitt durch diese Randbereiche nach der Verbindung, Fig. 17 eine Draufsicht auf den Randbereich einer weiteren Variante der Erfindung, Fig. 18 eine Draufsicht auf zwei derartige, miteinander verbundene Randbereiche, Fig. 19 einen Schnitt durch dieselben, Fig. 20 einen Schnitt durch zwei Randbereiche gemäß einer weiteren Ausführungsform der Erfindung vor der Verbindung, Fig. 21 einen entsprechenden Schnitt nach der Verbindung der Randbereiche, Fig. 22 einen Schnitt ähnlich Fig. 21, Fig. 23 und 24 je einen Schnitt durch weitere Ausführungsformen, Fig. 25 einen Schnitt durch eine weitere Variante der Erfindung vor der Verbindung der Randbereiche, Fig. 26 einen Schnitt durch diese Variante nach der Verbindung, Fig. 27 einen Schnitt durch eine weitere Variante der Erfindung vor der Verbindung der Randbereiche, Fig. 28 einen Schnitt durch diese Variante nach der Verbindung, Fig. 29 und 30 je einen Schnitt durch die Randbereiche zweier weiterer Ausführungsformen, Fig. 31 bis 33 in schaubildlicher Ansicht je eine weitere Ausführungsform des erfindungsgemäßen Hohlkörpers, Fig. 34 in schaubildlicher Ansicht einen geknickten Hohlkörper, Fig. 35 in schaubildlicher Ansicht einen gekrümmten Hohlkörper, Fig. 36 in Stirnansicht die Verbindung der Randbereiche mittels eines Walzengerüstes und Fig. 37 in Stirnansicht die Verbindung der Randbereiche mit Hilfe einer Presse.

Anhand der Fig. 1 bis 6 wird eine erste Ausführungsform der Erfindung beschrieben. Der Hohlkörper 1 besteht im wesentlichen aus zwei gleichgestalteten Bauteilen 2 aus Flachmaterial, vorzugsweise aus Metallblech, in Form jeweils einer seichten Schachtel, d.h. in Form einer Tafel mit rechtwinkelig abgekanteten, relativ schmalen Randbereichen 3. Diese Randbereiche 3 weisen über ihre gesamte Erstreckung Zähne 4 auf, zwischen denen hiezu komplementäre Ausnehmungen 5 vorhanden sind, wobei die Zähne 4 und die Ausnehmungen 5 derart bemessen sind, daß die Zähne 4 bezüglich der Abmessungen 5 ein geringes Übermaß aufweisen, das im Bereich einer Übergangs- oder Preßpassung liegt. Die Zähne 4 sind im Bereich des Grundes der Ausnehmungen 5 entlang einer gemeinsamen Biegelinie in derselben Richtung abgebogen. Weiters sind bevorzugterweise in den (unteren) Bauteil 2 Aussteifungen 6 (Fig. 1, 2) zur Versteifung und/oder Montagezwecken eingelegt.

Die beiden gegengleichen Bauteile 2, 2 werden übereinander angeordnet (Fig. 2, 4) und in Pfeilrichtung gegeneinandergepreßt, wobei die Zähne 4 des einen Bauteiles 2 in die Ausnehmungen 5 des jeweils anderen Bauteiles 2 unter elastisch-plastischer Verformung der Zahnflanken an den Kontaktstellen mit den Ausnehmungen eingedrückt werden (Fig. 2, 4), bis die Zahnflächen am Grund dieser Ausnehmungen 5 anliegen (Fig. 3, 6), womit der Hohlkörper 1 fertiggestellt ist. Wie aus Fig. 6 ersichtlich, kreuzen die Randbereiche 3 im Bereich des Grundes der Ausnehmungen 5 einander und sind lediglich in diesem Bereich kraftschlüssig miteinander verbunden. Die Zähne 4 sind innerhalb des Hohlkörpers 1 angeordnet und somit von außen nicht sichtbar.

Fig. 7 zeigt je einen Abschnitt der Randbereiche 3 in größerem Maßstab sowie in schaubildlicher Ansicht. Diese Randbereiche 3 bzw. ihre Zähne 4 und Ausnehmungen 5 sind identisch ausgebildet, wobei die Ausnehmungen 5 an ihren freien Rändern offen sind. Alternativ sind gemäß Fig. 8 die Ausnehmungen 5 eines der Randbereiche 3 geschlossen. Zwecks Erleichterung des Zusammensetzens der Bauteile 2 sind die Zähne bei 4a abgerundet, wodurch sie beim Einsetzen in die Ausnehmungen 5 geführt werden. Nach der Verbindung der Randbereiche 3 in Pfeilrichtung bietet die Stoßstelle der Randbereiche 3 die Ansicht gemäß Fig. 9.

Fig. 10 und 11 zeigen eine Variante der Erfindung, bei der die Verbindung der Randbereiche 3 zusätzlich formschlüssig gesichert ist. Zu diesem Zweck sind an einem Randbereich 3 am Grund einiger Ausnehmungen 5 Fortsätze 7 vorgesehen und am anderen Randbereich 3 entsprechende, komplementäre Aussparungen 8 ausgebildet. Die in einem Kopf endenden Fortsätze 7 greifen nach der Verbindung der Randbereiche 3 formschlüssig in die Aussparungen 8 ein.

In Fig. 12 und 13 ist eine Abwandlung dieser Ausführungsform dargestellt, bei der ebenfalls in den Randbereichen 3 Fortsätze 7 am Grund der Ausnehmungen 5 bzw. Aussparungen 8 vorgesehen sind. Nach oder während der Verbindung der Randbereiche 3 werden die Fortsätze 7 hakenförmig ins Innere des Hohlkörpers umgebogen.

Fig. 14 bis 16 zeigen eine weitere Ausführungsform der Randbereiche 3 in Richtung der Fläche des Flachmaterials bzw. in Draufsicht bzw. im Schnitt betrachtet. Auch bei dieser Ausführungsform sind die Zähne 4 bei 4a abgerundet. Es ist gezeigt, daß nach dem Abbiegen der Zähne 4 aus der Ebene des Flachmaterials durch Stauchen desselben im Bereich der Biegelinie, d.h. des Grundes der Ausnehmungen 5 Ausbuchtungen 9 entstanden sind, die zu einer geringfügigen Verbreiterung der Zähne 4 und somit zu einem größeren Kraftschluß der Verbindung führen.

Alternativ sind gemäß Fig. 17 bis 19, die den Fig. 15 und 16 entsprechende Ansichten zeigen, die Zähne 4 im Bereich des Grundes der Zahnlücken mit seitlichen Vorsprüngen 10 versehen, die in einem der Dicke des Flachmaterials entsprechenden Abstand vom Grund der Ausnehmungen 5 angeordnet. Diese Vorsprünge 10 werden bei der Verbindung der Randbereiche 3 elastisch-plastisch verformt und schaffen nach der Verbindung nicht nur den oben erwähnten größeren Kraftschluß, sondern überdies einen zusätzlichen Formschluß, da sie zum Teil an der Hinterseite des gegenüberliegenden Randbereiches 3 herausragen und elastisch expandieren.

In Fig. 20 und 21 ist eine weitere Variante der Erfindung dargestellt, bei der die Zähne 4 zum Arretieren einer im Inneren des Hohlkörpers 1 angeordneten Einlage 11 herangezogen sind. Hiezu weisen die Zähne 4 zu ihrem zugeordneten Flachmaterial hin abgebogene Verlängerungen 12 auf, die während des Einsetzens der Zähne 4 in ihre zugeordneten Ausnehmungen 5 und Zusammenpressens der beiden Flachmaterialien in Pfeilrichtung durch Angriff am jeweils gegenüberliegenden Flachmaterial weiter abgebogen werden und dabei die Einlage 11 erfassen und in ihrer Lage arrretieren (Fig. 21). In diesem Fall ist die Einlage z. B. eine Akustikmatte, eine Versteifungsplatte od. dgl.

Fig. 22 zeigt, wie mit dieser Variante ein handelsüblicher Kupplungsmechanismus 13 zur Verbindung des Hohlkörpers 1 mit anderen Möbelteilen od. dgl. arretiert ist.

Fig. 23 zeigt eine weitere Ausführungsform dieser Variante, bei der die Verlängerungen 12 der Zähne zum Arretieren eines Bolzens 14, einer Paßfeder od. dgl. dienen. Fig. 23 stellt einen Schnitt durch einen Hohlkörper 1 in Form eines Hohlprofils dar, das an den Enden offen oder geschlossen sein kann. Der Bolzen 14 wird nach der Verbindung der Randbereiche 3 zwischen die von den Zähnen 4 und Verlängerungen 12 gebildeten Kanäle eingeschoben.

Gemäß Fig. 24 können die Zähne 4 nach der Verbindung auch an der Außenseite des Hohlkörpers angeordnet sein. Dabei ist zweckmäßig, die Zähne 4 mit einem zusätzlichen Bauteil 15 abzudecken, der von den Zähnen 4 arretiert sein kann.

Zwei weitere Ausführungsformen sin in Fig. 25 und 26 bzw. 27 und 28 dargestellt, deren Randbereiche 3 in gleicher Weise ausgestaltet sind, wie diejenigen der vorhin erläuterten Ausführungsformen. Bei dem Hohlkörper 1 nach Fig. 27 und 28 ist einer der Bauteile 2 völlig eben.

Soll ein paneelartiger Hohlkörper 1 hergestellt werden, bei dem die Verbindungsstelle zwischen Zähnen 4 und Ausnehmungen 5 von außen nicht sichtbar sein soll, so sind gemäß Fig. 29 die Randbereiche 3 zweimal umgebogen. Im übrigen entspricht die Verbindung einer der bisher erläuterten Ausführungsformen.

Fig. 30 zeigt einen paneelartigen Hohlkörper 1, bei dem die Zähne 4 zu dessen Außenseite weisen und mit einem zusätzlichen Bauteil 15 abgedeckt sind. Dabei ist der Bauteil 15 von den Zähnen 4 arretiert und hat aus optischen Gründen dieselbe Höhe wie der Hohlkörper 1.

In Fig. 31 bis 33 ist gezeigt, daß der Hohlkörper 1 nicht auf Paneelform beschränkt ist, sondern die unterschiedlichsten Gestalten aufweisen kann, wie halbkugelförmig (Fig. 31), pyramidenförmig (Fig. 32) oder aus kastenförmig (Fig. 33), wobei in diesem Fall der Hohlkörper 1 aus wenigstens drei Teilen zusammengesetzt ist. Er kann aber auch einstückig mit einer einzigen Verbindungsstelle ausgebildet sein.

Fig. 34 zeigt in schaubildlicher Ansicht einen geknickten, paneelartigen Hohlkörper 1, der zum Anbringen von Gegenständen mittels Häkchen od. dgl. einen Lochraster 16 aufweist.

In Fig. 35 ist ein ähnlicher Hohlkörper 1 mit Lochraster 16 dargestellt, der jedoch gekrümmt ist.

Zur Herstellung eines solchen Hohlkörpers 1 werden die Zähne 4 und Ausnehmungen 5 entsprechend dem fertigen Hohlkörpers ausgebildet. Dabei werden bei einem gekrümmten Hohlkörper 1 gemäß Fig. 35 die Zähne 4 und Ausnehmungen 5 im Krümmungsbereich 17 relativ schmal ausgebildet, wogegen sie in den übrigen, ebenen Bereichen 18 breiter sein können. Zweckmäßigerweise wird einer der Bauteile 2 vor der Verbindung in die endgültige Form gebracht und der andere Bauteil 2 während der Verbindung gekrümmt. Bei besonders dünnwandigen Bauteilen 2 können aber auch beide während der Verbindung gekrümmt werden.

Die Verbindung erfolgt gemäß Fig. 36 und 37 entweder mit Hilfe eines Walzenpaares 19 oder einer Presse 20. Sie wird schrittweise durchgeführt, wobei ähnlich einem Reißverschluß die Zähne 4 nacheinander in die Ausnehmungen 5 gepreßt werden. Wird aus einem einzigen Bauteil ein rohrförmiger Hohlkörper hergestellt, so erfolgt die Verbindung z. B. mittels um die Mantelfläche gelegter Spannbänder.

## Patentansprüche

1. Hohlkörper (1), der aus mindestens einem Bauteil (2) aus Flachmaterial, vorzugsweise aus Metallblech, besteht und bei dem zumindest ein erster Randbereich (3) mit einem zweiten Randbereich (3) verbunden ist, wobei der erste Randbereich (3) eine Reihe Ausnehmungen (5) und der zweite Randbereich (3) eine Reihe zu diesen Ausnehmungen (5) komplementäre Zähne (4) mit dazwischen befindlichen Ausnehmungen (5) aufweist, wobei die Zähne (4) des zweiten Randbereiches (3) in die Ausnehmungen (5) des ersten Randbereiches (3) eingreifen, **dadurch gekennzeichnet, daß** die Randbereiche (3) im Bereich des Grundes der Ausnehmungen (5) einander kreuzen und lediglich in diesem Bereich über die Dicke des Flachmaterials kraftschlüssig miteinander verbunden sind.

2. Hohlkörper nach Anspruch 1, **dadurch gekennzeichnet, daß** die Randbereiche (3) bezüglich der Fläche des angrenzenden Flachmaterials jeweils entlang einer Biegelinie in derselben Richtung um einen vorbestimmten Winkel abgebogen sind.

3. Hohlkörper nach Anspruch 2, **dadurch gekennzeichnet, daß** die Biegelinie im Bereich des Grundes der Ausnehmungen (5) verläuft.

4. Hohlkörper nach einem der Ansprüche 1 bis 3, **dadurch gekennzeichnet, daß** die Zahnflächen am Grund der Ausnehmungen (5) anliegen.

5. Hohlkörper nach einem der Ansprüche 1 bis 4, **dadurch gekennzeichnet, daß** die Ausnehmungen (5) des ersten Randbereiches (3) am freien Rand des Flachmaterials offen sind, wobei dazwischenliegende Zähne (4) gebildet sind.

6. Hohlkörper nach einem der Ansprüche 1 bis 5, **dadurch gekennzeichnet, daß** sämtliche Zähne (4) im Bereich des Grundes ihrer Zahnlücken seitliche Vorsprünge (10) aufweisen, deren Höhe im Bereich einer Übergangs- oder Preßpassung liegt (Fig. 17, 18).

7. Hohlkörper nach Anspruch 6, **dadurch gekennzeichnet, daß** die Vorsprünge (10) in einem der Dicke des Flachmaterials entsprechenden Abstand vom Grund der Ausnehmung (5) angeordnet sind.

8. Hohlkörper nach einem der Ansprüche 1 bis 7, **dadurch gekennzeichnet, daß** beide Randbereiche (3) geometrisch identisch ausgebildet sind.

9. Hohlkörper nach einem der Ansprüche 1 bis 8, **dadurch gekennzeichnet, daß** die Zähne (4) entlang der Länge der Randbereiche (3) mehrere unterschiedliche Zahnformen und/oder -breiten aufweisen.

10. Hohlkörper nach einem der Ansprüche 1 bis 9, **dadurch gekennzeichnet, daß** die Zähne (4) an ihren freien Enden abgeschrägt oder abgerundet sind (Fig. 14, 15).

11. Hohlkörper nach einem der Ansprüche 1 bis 10, **dadurch gekennzeichnet, daß** die beiden Randbereiche (3) an ihren freien Rändern zu ihrem zugeordneten Flachmaterial abgebogene Verlängerungen (12) aufweisen, zwischen denen ein Bolzen (14), eine Paßfeder od. dgl. eingesetzt ist (Fig. 23).

12. Hohlkörper nach einem der Ansprüche 1 bis 11, **dadurch gekennzeichnet, daß** an einem der Randbereiche (3) am Grund wenigstens einer Ausnehmung (5) zumindest ein Fortsatz (7) vorgesehen ist und daß am jeweils anderen Randbereich (3) mindestens eine Aussparung (8) ausgebildet ist, wobei jeder Fortsatz (7) in seine zugeordnete Aussparung (8) formschlüssig eingreift (Fig. 10 bis 13).

13. Hohlkörper nach einem der Ansprüche 1 bis 12, **dadurch gekennzeichnet, daß** der Hohlkörper (1) im wesentlichen allseitig geschlossen ist und daß entlang sämtlicher Randbereiche (3) Zähne (4) und Ausnehmungen (5) vorgesehen sind.

14. Hohlkörper nach Anspruch 13, **dadurch gekennzeichnet, daß** der Hohlkörper (1) in Form einer Platte, Tafel oder eines Paneels ausgebildet ist.

15. Hohlkörper nach einem der Ansprüche 1 bis 14, **dadurch gekennzeichnet, daß** die Randbereiche (3) an der Schmalseite des Hohlkörpers (1) miteinander verbunden und gegebenenfalls mit einem zusätzlich angebrachten Bauteil (15) abgedeckt sind (Fig. 30).

16. Hohlkörper nach einem der Ansprüche 1 bis 15, **dadurch gekennzeichnet, daß** der Hohlkörper (1) aus zwei identischen Bauteilen (2) aus Flachmaterial besteht.

17. Hohlkörper nach einem der Ansprüche 1 bis 16, **dadurch gekennzeichnet, daß** der Hohlkörper (1) aus wenigstens zwei Bauteilen (2) aus Flachmaterial aus verschiedenen Werkstoffen besteht.

18. Hohlkörper nach einem der Ansprüche 1 bis 17, **dadurch gekennzeichnet, daß** die Flachmaterialien unterschiedliche Dicke aufweisen.

19. Hohlkörper nach einem der Ansprüche 1 bis 18, **dadurch gekennzeichnet, daß** im Inneren des Hohlkörpers Aussteifungen (6), Gewindeplatten, Kupplungsmechanismen (13), Einlagen (11) aus Isolier-, Dämm-, Dekor-Material od. dgl. vorgesehen und gegebenenfalls von den Zähnen (4) arretiert sind (Fig. 22, 21).

20. Hohlkörper nach einem der Ansprüche 1 bis 19, **dadurch gekennzeichnet, daß** der Hohlkörper (1) Öffnungen, vorzugsweise einen Lochraster (16) aufweist.

21. Verfahren zur Herstellung eines Hohlkörpers (1) nach einem der Ansprüche 1 bis 20, bei dem an wenigstens einem ersten Randbereich (3) eine Reihe Ausnehmungen (5) und an wenigstens einem zweiten Randbereich (3) eine Reihe zu diesen Ausnehmungen (5) komplementäre Zähne (4) mit dazwischen befindlichen Ausnehmungen (5) ausgebildet und zur Verbindung der Randbereiche (3) die Zähne (4) des zweiten Rand-bereiches (3) in die Ausnehmungen (5) des ersten Randbereiches (3) eingesetzt werden, **dadurch gekennzeichnet, daß** die Randbereiche (3) vor ihrer Verbindung bezüglich der Fläche des angrenzenden Flachmaterials jeweils entlang einer Biegelinie in derselben Richtung um einen vorbestimmten Winkel abgebogen werden und daß das Einsetzen der Zähne (4) in die Ausnehmungen (5) im wesentlichen senkrecht zur Fläche des angrenzenden Flachmaterials durchgeführt wird.

22. Verfahren zur Herstellung eines Hohlkörpers (1) nach einem der Ansprüche 1 bis 20, bei dem an wenigstens einem ersten Randbereich (3) eine Reihe Ausnehmungen (5) und an wenigstens einem zweiten Randbereich (3) eine Reihe zu diesen Ausnehmungen (5) komplementäre Zähne (4) mit dazwischen befindlichen Ausnehmungen (5) ausgebildet und zur Verbindung der Randbereiche (3) die Zähne (4) des zweiten Rand-bereiches (3) in die Ausnehmungen (5) des ersten Randbereiches (3) eingesetzt werden, **dadurch gekennzeichnet, daß** die Randbereiche (3) um einen spitzen Winkel abgebogen werden, wobei die Biegelinie im Bereich des Grundes der Ausnehmungen (5) verläuft, und daß das Einsetzen der Zähne (4) in die Ausnehmungen (5) im wesentlichen in der Fläche des angrenzenden Flachmaterials durchgeführt wird.

23. Verfahren nach Anspruch 21 oder 22, **dadurch gekennzeichnet, daß** während des Einsetzens der Zähne (4) in die Ausnehmungen (5) deren Flanken an den Kontaktstellen elastisch-plastisch verformt werden.

24. Verfahren nach einem der Ansprüche 21 bis 23 **dadurch gekennzeichnet, daß** das Einsetzen der Zähne (4) in die Ausnehmungen (5) schrittweise nach Art eines Reißverschlusses durchgeführt wird.

25. Verfahren nach einem der Ansprüche 21 bis 24, **dadurch gekennzeichnet, daß** vor der Verbindung der Randbereiche (3) an denselben an ihren freien Rändern Verlängerungen (12) ausgebildet und diese zu ihrem zugeordneten Flachmaterial abgebogen werden, daß zwischen die Verlängerungen (12) ein Bolzen (14), eine Paßfeder od. dgl. (11) eingelegt und daß bei der Verbindung der Randbereiche (3) die Verlängerungen (12) durch Angriff am jeweils anderen, gegenüberliegenden Flachmaterial weiter abgebogen werden und zugleich der Bolzen (14), die Paßfeder od. dgl. (11) von den Verlängerungen (12) arretiert wird. (Fig. 20 bis 23).

26. Verfahren nach Anspruch 24 oder 25, **dadurch gekennzeichnet, daß** zur Herstellung eines gekrümmten Hohlkörpers (1) die Zähne (4) und Ausnehmungen (5) entsprechend dem fertigen Hohlkörper (1) ausgebildet werden und daß eines der Flachmaterialien vor der Verbindung der Randbereiche (3) und das andere Flachmaterial während dieser Verbindung gekrümmt wird (Fig. 35).

27. Verfahren nach Anspruch 24 oder 25, **dadurch gekennzeichnet, daß** zur Herstellung eines gekrümmten Hohlkörpers (1) die Zähne (4) und Ausnehmungen (5) entsprechend dem fertigen Hohlkörper (1) ausgebildet werden und daß während der Verbindung der Randbereiche (3) beide Flachmaterialien gekrümmt werden (Fig.35).

## Claims

1. Hollow body (1) consisting of at least one flat material element (2), preferably from sheet metal, in which at least a first edge portion (3) is connected with a second edge portion (3), the first edge portion (3) comprising a series of recesses (5) and the second edge portion (3) comprising a series of teeth (4) complementary to these recesses (5) with recesses (5) between them, the teeth (4) of the second edge portion (3) engaging with the recesses (5) of the first edge portion (3), **characterized in that** the edge portions (3) cross in the region of the bottom of the recesses (5) and are connected with each other by adherence through the thickness of the flat material in this region only.

2. Hollow body according to claim 1, **characterized in that** the edge portions (3) are bent along a bending line in the same direction at a predetermined angle with respect to the plane of the adjacent flat material.

3. Hollow body according to claim 2, **characterized in that** the bending line extends in the region of the bottom of the recesses (5).

4. Hollow body according to one of the claims 1 to 3, **characterized in that** the tooth surfaces abut on the bottom of the recesses (5).

5. Hollow body according to one of the claims 1 to 4, **characterized in that** the recesses (5) of the first edge portion (3) are open at the free edge of the flat material, with teeth (4) formed inbetween.

6. Hollow body according to one of the claims 1 to 5, **characterized in that** all teeth (4) comprise lateral protuberances (10) in the region of the bottom of their tooth spaces whose height results in a transition or press fit (Figs 17, 18).

7. Hollow body according to claim 6, **characterized in that** the protuberances (10) are arranged at a distance from the bottom of the recess (5) corresponding to the thickness of the flat material.

8. Hollow body according to one of the claims 1 to 7, **characterized in that** the two edge portions (3) are geometrically identical.

9. Hollow body according to one of the claims 1 to 8, **characterized in that** the teeth (4) along the length of the edge portions (3) have several different teeth shapes and/or widths.

10. Hollow body according to one of the claims 1 to 9, **characterized in that** the teeth (4) are bevelled or rounded off at their free ends (Figs 14, 15).

11. Hollow body according to one of the claims 1 to 10, **characterized in that** the two edge portions (3) comprise extensions (12) at their free edges which are bent towards their corresponding flat material between which a bolt (14), a feather key or the like is inserted (Fig. 23).

12. Hollow body according to one of the claims 1 to 11, **characterized in that** at least one projection (7) is provided at one of the edge portions (3) at the bottom of at least one recess (5) and that at the respective other edge portion (3) at least one cutout (8) is provided, each projection (7) engaging interlockingly with its corresponding cutout (8) (Figs 10 to 13).

13. Hollow body according to one of the claims 1 to 12, **characterized in that** the hollow body (1) is substantially closed on all sides and that teeth (4) and recesses (5) are provided along all edge portions (3).

14. Hollow body according to claim 13, **characterized in that** the hollow body (1) has the shape of a plate, board or panel.

15. Hollow body according to one of the claims 1 to 14, **characterized in that** the edge portions (3) are connected with each other on the narrow side of the hollow body (1) and are covered with an additional element (15) provided if necessary (Fig. 30).

16. Hollow body according to one of the claims 1 to 15, **characterized in that** the hollow body (1) consists of two identical flat material elements (2).

17. Hollow body according to one of the claims 1 to 16, **characterized in that** the hollow body (1) consists of at least two flat material elements (2) from different materials.

18. Hollow body according to one of the claims 1 to 17, **characterized in that** the flat materials have different thickness.

19. Hollow body according to one of the claims 1 to 18, **characterized in that** stiffeners (6), threaded plates, coupling mechanisms (13), inserts (11) from sealing, insulating or decorating material or the like are provided in the interior of the hollow body which are fixed by the teeth (4) if necessary (Figs 22, 21).

20. Hollow body according to one of the claims 1 to 19, **characterized in that** the hollow body (1) is provided with openings, preferably an array of perforations (16).

21. Process for manufacturing a hollow body (1) according to one of the claims 1 to 20, comprising a number of recesses (5) at least in a first edge portion (3) and a number of teeth (4) complementary to these recesses (5) at least in a second edge portion (3) with recesses (5) in-between and comprising inserting the teeth (4) of the second edge portion (3) in the recesses (5) of the first edge portion (3) for connecting the edge portions (3), **characterized in that** the edge portions (3) are bent along a bending line in the same direction at a predetermined angle with respect to the plane of the adjacent flat material prior to their connection and that the insertion of the teeth (4) into the recesses (5) is effected substantially perpendicularly to the plane of the adjacent flat material.

22. Process for manufacturing a hollow body (1) according to one of the claims 1 to 20, comprising a number of recesses (5) in at least a first edge portion (3) and a number of teeth (4) complementary to these recesses (5) in at least a second edge portion (3) with recesses (5) in-between and comprising inserting the teeth (4) of the second edge portion (3) into the recesses (5) of the first edge portion (3) for connecting the edge portions (3), **characterized in that** the edge portions (3) are bent at an acute angle, the bending line extending in the region of the bottom of the recesses (5), and that the teeth (4) are inserted in the recesses (5) substantially in the plane of the adjacent flat material.

23. Process according to claim 21 or 22, **characterized in that** during insertion of the teeth (4) in the recesses (5) their flanks are deformed elastically/plastically at the points of contact.

24. Process according to one of the claims 21 to 23, **characterized in that** the teeth (4) are progressively inserted in the recesses (5) in the manner of a zipper.

25. Process according to one of the claims 21 to 24, **characterized in that** prior to connecting the edge portions (3) extensions (12) are formed at their free edges and that these are bent towards their corresponding flat material, that a bolt (14), a feather key or the like (11) is inserted between the extensions (12) and that when the edge portions (3) are connected the extensions (12) are further bent by engagement with the respective other flat material opposite and that at the same time the bolt (14), feather key or the like (11) is fixed by the extensions (12) (Figs 20 to 23).

26. Process according to claim 24 or 25, **characterized in that** for manufacturing a bent hollow body (1) the teeth (4) and recesses (5) are formed in conformity with the finished hollow body (1) and that one of the flat materials is bent prior to connecting the edge portions (3) and the other flat material is bent during such connection. (Fig. 35).

27. Process according to claims 24 or 25, **characterized in that** for manufacturing a bent hollow body (1) the teeth (4) and recesses (5) are formed in conformity with the finished hollow body (1) and that both flat materials are bent while the edge portions (3) are connected (Fig. 35).

## Revendications

1. Corps creux constitué d'au moins un élément de construction (2) en matériau plat, de préférence en tôle métallique, dont au moins une première zone de bord (3) est reliée à une seconde zone de bord (3), la première zone de bord (3) présentant une rangée d'échancrures (5) et la seconde zone de bord (3) une rangée de dents (4) complémentaires aux échancrures (5) ainsi que des échancrures (5) intermédiaires, les dents (4) de la seconde zone de bord (3) s'engageant dans les échancrures (5) de la première zone de bord (3), **caractérisé en ce que** les zones de bord (3) se croisent réciproquement dans la région du fond des échancrures (5) et sont reliées entre elles par adhérence moyennant l'épaisseur du matériau plat, uniquement dans cette région.

2. Corps creux selon la revendication 1, **caractérisé en ce que** les zones de bord (3) sont recourbées par rapport à la surface du matériau plat voisin à un angle prédéterminé le long d'une ligne de courbure dans la même direction.

3. Corps creux selon la revendication 2, **caractérisé en ce que** la ligne de courbure s'étend dans la région du fond des échancrures (5).

4. Corps creux selon l'une quelconque des revendications 1 à 3, **caractérisé en ce que** les surfaces de dent reposent contre le fond des échancrures (5).

5. Corps creux selon l'une quelconque des revendications 1 à 4, **caractérisé en ce que** les échancrures (5) de la première zone de bord (3) sont ouvertes au bord libre du matériau plat, des dents intermédiaires (4) étant formées.

6. Corps creux selon l'une quelconque des revendications 1 à 5, **caractérisé en ce que** la totalité des dents (4), dans la région du fond de leurs interstices dentaires, présente des saillies (10) latérales dont le sommet se trouve dans la zone d'un ajustement de transition ou serré (fig. 17, 18).

7. Corps creux selon la revendication 6, **caractérisé en ce que** les saillies (10) sont disposées à une distance du fond de l'échancrure (5) correspondant à l'épaisseur du matériau plat.

8. Corps creux selon l'une quelconque des revendications 1 à 7, **caractérisé en ce que** les deux zones de bord (3) ont une forme géométrique identique.

9. Corps creux selon l'une quelconque des revendications 1 à 8, **caractérisé en ce que** les dents (4) présentent le long de la longueur des zones de bord (3) plusieurs formes et/ou largeurs de dent différentes.

10. Corps creux selon l'une quelconque des revendications 1 à 9, **caractérisé en ce que** les dents (4) sont biseautées ou arrondies à leurs extrémités libres (fig. 14, 15).

11. Corps creux selon l'une quelconque des revendications 1 à 10, **caractérisé en ce que** les deux zones de bord (3) présentent à leurs bords libres des prolongements (12) repliés vers leur matériau plat associé, prolongements entre lesquels un boulon (14), un ressort d'ajustement ou un élément semblable est inséré (fig. 23).

12. Corps creux selon l'une quelconque des revendications 1 à 11, **caractérisé en ce qu'**à une des zones de bord (3), au fond d'au moins une échancrure (5), au moins une projection (7) est prévue et qu'à l'autre zone de bord (3) au moins une échancrure (8) est formée, chaque projection (7) s'insérant par adhérence dans son échancrure (8) associée (fig. 10 à 13).

13. Corps creux selon l'une quelconque des revendications 1 à 12, **caractérisé en ce que** le corps creux (1) est essentiellement fermé de tous côtés et que le long de la totalité des zones de bord (3) des dents (4) et des échancrures (5) sont prévues.

14. Corps creux selon la revendication 13, **caractérisé en ce que** le corps creux (1) est formé comme plaque, plateau ou panneau.

15. Corps creux selon l'une quelconque des revendications 1 à 14, **caractérisé en ce que** les zones de bord (3) sont reliées entre elles le long du côté étroit du corps creux (1) et sont recouvertes le cas échéant d'un élément de construction (15) appliqué en plus (fig. 30).

16. Corps creux selon l'une quelconque des revendications 1 à 15, **caractérisé en ce que** le corps creux (1) consiste en deux éléments de construction (2) identiques en matériau plat.

17. Corps creux selon l'une quelconque des revendications 1 à 16, **caractérisé en ce que** le corps creux (1) consiste en au moins deux éléments de construction (2) en matériau plat de matières à usiner différentes.

18. Corps creux selon l'une quelconque des revendications 1 à 17, **caractérisé en ce que** les matériaux plats présentent des épaisseurs différentes.

19. Corps creux selon l'une quelconque des revendications 1 à 18, **caractérisé en ce qu'**à l'intérieur du corps creux des entretoises (6), des plaques filetées, des mécanismes de raccordement (13), des inserts (11) en matériau d'isolation, d'amortissement, de décor ou matériau semblable sont prévus et le cas échéant arrêtés par les dents (4) (fig. 22, 21).

20. Corps creux selon l'une quelconque des revendications 1 à 19, **caractérisé en ce que** le corps creux (1) présente des orifices, de préférence une trame de perforations (16).

21. Méthode pour la fabrication d'un corps creux (1) selon l'une quelconque des revendications 1 à 20, dans laquelle est formée à au moins une première zone de bord (3) une rangée d'échancrures (5) et à au moins une seconde zone de bord (3) une rangée de dents (4) complémentaires à ces échancrures (5) ainsi que des échancrures (5) intermédiaires et dans laquelle pour la liaison des zones de bord (3), les dents (4) de la seconde zone de bord (3) sont insérées dans les échancrures (5) de la première zone de bord (3), **caractérisée en ce qu'**avant leur liaison, les zones de bord (3) sont recourbées par rapport à la surface du matériau plat voisin à un angle prédéterminé le long d'une ligne de courbure dans la même direction et que l'insertion des dents (4) dans les échancrures (5) est réalisée substantiellement en verticale par rapport à la surface du matériau plat voisin .

22. Méthode pour la fabrication d'un corps creux (1) selon l'une quelconque des revendications 1 à 20, dans laquelle sont formées à au moins une première zone de bord (3) une rangée d'échancrures (5) et à au moins une seconde zone de bord (3), une rangée de dents (4) complémentaires à ces échancrures (5) ainsi que des échancrures (5) intermédiaires et dans laquelle pour la liaison des zones de bord (3), les dents (4) de la seconde zone de bord (3) sont insérées dans les échancrures (5) de la première zone de bord (3), **caractérisée en ce que** les zones de bord (3) sont recourbées à angle aigu, la ligne de courbure s'étendant dans la région du fond des échancrures (5), et que l'insertion des dents (4) dans les échancrures (5) se fait essentiellement dans la surface du matériau plat voisin.

23. Méthode selon les revendications 21 ou 22, **caractérisée en ce que** pendant l'insertion des dents (4) dans les échancrures (5) leurs flancs sont déformés de manière élastique/plastique aux points de contact.

24. Méthode selon l'une quelconque des revendications 21 à 23, **caractérisée en ce que** l'insertion des dents (4) dans les échancrures (5) se fait progressivement à la manière d'une fermeture à glissière.

25. Méthode selon l'une quelconque des revendications 21 à 24, **caractérisée en ce qu'**avant la liaison des zones de bord (3) des prolongements (12) sont formés aux bords libres de ces dernières et que les prolongements sont recourbés vers le matériau plat qui leur est associé, qu'entre les prolongements (12) un boulon (14), un ressort d'ajustement ou un élément semblable (11) est inséré et que lors de la liaison des zones de bord (3) les prolongements (12) continuent à être recourbés par l'attaque à l'autre matériau plat leur faisant face et que dans l'opération, le boulon (14), le ressort d'ajustement ou l'élément semblable (11) est arrêté par les prolongements (12) (fig. 20 à 23).

26. Méthode selon les revendications 24 ou 25, **caractérisée en ce que** pour la fabrication d'un corps creux (1) courbé, les dents (4) et les échancrures (5) sont formées en conformité avec le corps creux (1) fini et qu'un des matériaux plats est courbé avant la liaison des zones de bord (3) et l'autre matériau plat pendant cette liaison (Fig. 35).

27. Méthode selon les revendications 24 ou 25, **caractérisée en ce que** pour la fabrication d'un corps creux (1) courbé, les dents (4) et les échancrures (5) sont formées en conformité avec le corps creux (1) fini et que pendant la liaison des zones de bord (3) les deux matériaux plats sont courbés (fig. 35).
